# DEMANDE DE BREVET EUROPEEN

(11) **EP 2 053 545 A1**
(43) Date de publication de la demande: **29.04.2009**
(21) Numéro de dépôt: 07301500.0
(22) Date de dépôt: 26.10.2007
(51) Int. Cl.: G06K 19/073

(54) **Procédé de réalisation de dispositifs de communication radiofréquence comprenant un interrupteur provisoirement en court-circuit**

(71) Demandeur: GEMPLUS, 13420 Gémenos (FR)
(72) Inventeur: Seban, Frédérick, 13260 Cassis (FR); Méridiano, Jean-Luc, 83170 Tourves (FR); Fidalgo, Jean-Christophe, 13420 Géménos (FR)

(57) **Abrégé**

L'invention concerne un procédé de réalisation d'un dispositif de communication radiofréquence comportant un composant électronique, un circuit d'antenne associé au composant électronique et un interrupteur sur le circuit apte à fermer le circuit d'antenne;

Le procédé se distingue en ce qu'il comprend les étapes suivantes selon lesquelles un élément de court-circuit (C, C', CF) est disposé sur le circuit d'antenne (13) de manière à court-circuiter l'interrupteur (14, 42) ou des bornes (30, 32) destinées à connecter un interrupteur, ledit élément étant apte à être ouvert dans une étape ultérieure.

L'invention concerne également les dispositifs obtenus.

## Description

L'invention concerne un procédé de réalisation de dispositifs de communication radiofréquence pouvant recevoir un interrupteur de fonctionnement empêchant la lecture du dispositif à l'insu du porteur. Elle concerne également les dispositifs obtenus.

Les dispositifs visés en premier lieu par l'invention sont des cartes à puce de type sans-contact ou hybride, des inserts comportant une antenne radiofréquence, le cas échéant tout support de circuit d'antenne comme des passeports électroniques. De tels dispositifs à communication radiofréquence dits transpondeurs sans-contact, répondent pour la plupart à la norme ISO-IEC 14443.

Ce dispositif est destiné à fournir au porteur du transpondeur des moyens pour accepter et/ou refuser l'accès à des données contenues dans ledit transpondeur à un dispositif de lecture externe. En effet, l'un des problèmes soulevés par les transpondeurs sans-contact, et notamment pour des applications sensibles telles que carte bancaire, porte-monnaie électronique, e-passeport, cartes d'identité, provient du fait que le transpondeur, peut être interrogé par un lecteur distant, et cette opération peut être effectuée alors même que le porteur n'en est pas conscient.

L'un des moyens permettant de résoudre cet inconvénient est l'utilisation d'un interrupteur. Ce moyen efficace reste non applicable à des antennes dont les lignes ne dépassent pas une certaine largeur (1mm); Il est donc difficile d'établir des contacts avec interrupteur sur des antennes en fil incrusté ou fil conducteur fixé par broderie ou équivalent. Or aujourd'hui, l'utilisation de tels fils conducteurs s'avère préféré pour être conforme aux différentes normes d'autant plus que les dispositifs sont de plus en plus réduits.

De tels fils conducteurs, généralement en cuivre, très fins, de l'ordre de 113 µm, et espacés de l'ordre de 700 µm pour constituer des spires d'antenne, permettent d'obtenir un facteur qualité élevé, par exemple supérieur à 44 contrairement à des antennes obtenues par dépôt de matière conductrice, notamment par sérigraphie d'encre conductrice. Le diamètre des spires peut être compris entre 200 µm et 300 µm.

De plus le changement de la technologie actuelle de fabrication des carte implique un changement de processus qui pourrait engendrer beaucoup de contraintes.

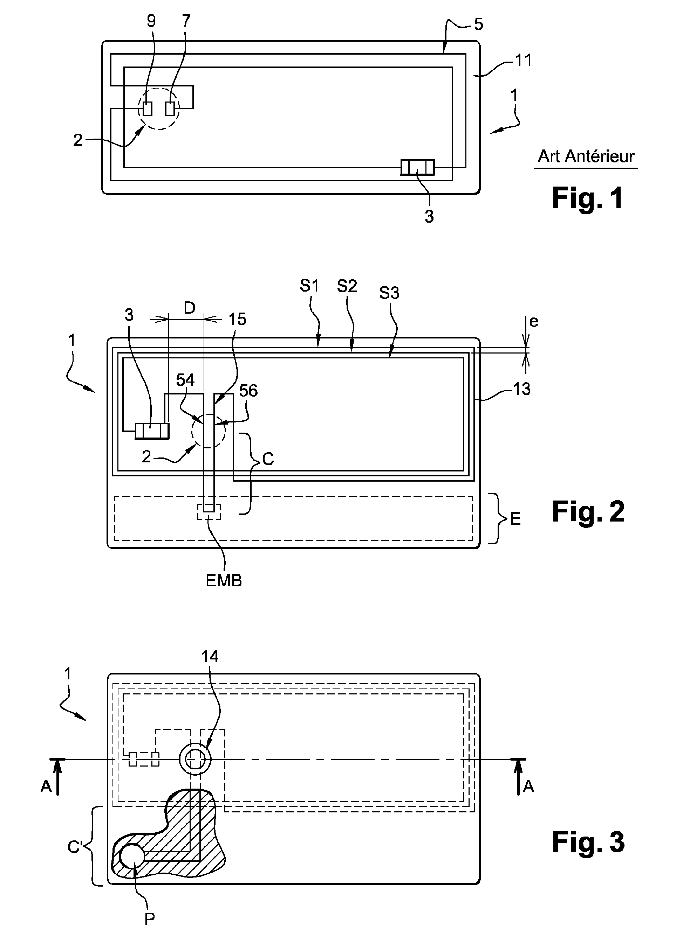

Le deuxième inconvénient du processus utilisé aujourd'hui dans les cartes avec bouton tel qu'illustré à la figure 1, est le changement du parcours ou agencement de l'antenne équipé d'une portion de circuit ouvert pour accueillir le bouton. Le procédé actuel ne permet pas de tester le fonctionnement de la carte avant le rajout du bouton. De plus, il nous impose un nouvel agencement des spires d'antenne, un nouveau produit et donc des nouvelles contraintes de gestion de stock.

L'invention a pour objectif de résoudre les inconvénients précités et de permettre plus de flexibilité dans la production et le test de fonctionnement.

Un autre objectif est d'éviter d'agir physiquement sur l'interrupteur lors des étapes de test électrique ou éviter de modifier la multitude d'équipements dédiée à cela.

Un autre objectif est de retarder le plus possible pendant la production du dispositif voire même après, une désactivation de l'antenne créée par la présence du bouton. En particulier, l'invention vise à rendre fonctionnelle la carte sans-contact au moins jusqu'aux étapes de test électrique comme le test d'initialisation ou test de personnalisation malgré la présence d'un interrupteur qui, en position de repos, empêche le fonctionnement.

L'invention réside dans son principe à ajouter au niveau de l'antenne, une boucle conductrice ou portion de circuit disposée en parallèle à des bornes de circuit d'antenne destinées éventuellement à recevoir un interrupteur; ainsi il est possible d'avoir des cartes ou inserts utilisables soit avec moyen d'inhibition / autorisation sous forme de bouton, soit comme simples cartes sans-contact standards.

Il est remarqué que l'ajout de portion conductrice à distance des spires n'a quasiment pas d'influence sur les propriétés radiofréquences de la carte réalisée.

Si on souhaite un bouton dont l'actionnement autorise la communication sur la carte, on procède alors à une étape d'installation d'un interrupteur; Dans le cas contraire, dans une version simplifiée, sans interrupteur, la carte restera fonctionnelle indépendamment de l'autorisation du porteur.

La solution proposée ici offre l'avantage d'utiliser un bouton avec toutes les technologies actuelles de fabrication d'insert sans-contact ou ("inlay" en terminologie anglo-saxonne). La solution est compatible avec les procédés de fabrication des cartes à puce normalisées.

L'invention comprend un premier mode de réalisation préféré, dans l'association d'un circuit RFID comprenant un interrupteur avec une configuration spécifique du circuit antenne (RF) puis dans le recours à l'embossage. Cette configuration spécifique a la particularité de court-circuiter l'interrupteur le rendant inactif au moins provisoirement. Ce court-circuit se trouve de préférence dans une zone d'embossage.

Lors de l'étape finale de personnalisation d'une carte sans contact de type bancaire, un embossage déterminé réalisé au cours du procédé d'embossage, en soi nécessaire, coupe la continuité du circuit RF rendant ainsi l'interrupteur actif. Cette configuration ou design spécifique est de préférence au coeur de la carte dans une sous-partie dite "inlay", alors que le dispositif interrupteur est de préférence situé en surface de la carte à travers au moins une feuille de couverture.

L'invention comprend un autre mode de réalisation préféré, dans lequel on a recours à des éléments électriques de type fusible qui seront détruits en toute fin de production afin de rétablir la fonction de l'interrupteur. La destruction des éléments fusibles peut être réalisée par une surcharge d'intensité électrique générée notamment par radiofréquence dans le circuit d'antenne.

Le dispositif de l'invention est destiné à la fabrication de carte sans contact avec interrupteur, et permettra à la carte sans-contact d'être fonctionnelle jusqu'aux étapes de test électrique tels que test d'initialisation, test de personnalisation etc. sans agir sur l'interrupteur.

L'invention a donc pour premier objet un procédé de réalisation d'un dispositif de communication radiofréquence comportant un composant électronique, un circuit d'antenne associé au composant électronique et un interrupteur sur le circuit apte à fermer le circuit d'antenne;

Le procédé se distingue en ce qu'il comprend l'étape suivante selon laquelle un élément de court-circuit est disposé sur le circuit d'antenne de manière à court-circuiter l'interrupteur ou des bornes destinées à connecter un interrupteur, ledit élément étant apte à être ouvert dans une étape ultérieure.

Ce procédé de fabrication a l'avantage d'utiliser un seul type d'insert qui est commun à chaque dispositif avec ou sans interrupteur.

Il permet aussi de tester électriquement l'insert ou de charger des données dans l'insert à un stade très avancé de la fabrication du dispositif voire jusqu'à l'utilisateur final. Alors que dans l'art antérieur, il faut attendre d'avoir le bouton sur la carte et puis l'actionner pour permettre le fonctionnement.

L'invention a également pour objet un dispositif électronique de communication radiofréquence comportant un composant électronique (3), un circuit électrique d'antenne (22) relié au composant électronique et un interrupteur (42) disposé sur le circuit d'antenne et apte à fermer le circuit d'antenne sur actionnement;

Le dispositif se distingue en ce qu'il comprend un élément de court-circuit disposé sur le circuit d'antenne de manière à court-circuiter l'interrupteur ou des bornes destinées à connecter un interrupteur, ledit élément de court-circuit ayant été ouvert ou étant apte à l'être.

D'autres particularités et avantages de l'invention apparaîtront à la lecture de la description faite à titre d'exemple non limitatif et en regard des dessins annexés sur lesquels :
- La figure 1 illustre schématiquement un transpondeur radiofréquence destiné à recevoir un interrupteur et comportant une antenne réalisée selon l'art antérieur;
- La figure 2 illustre un transpondeur obtenu selon un premier mode de mise en oeuvre du procédé de l'invention;
- La figure 3 illustre un autre transpondeur obtenu selon un deuxième mode de mise en oeuvre du procédé de l'invention;
- La figure 4 illustre un autre transpondeur obtenu selon un troisième mode de mise en oeuvre du procédé de l'invention avec fusible;
- La figure 5 illustre une vue en coupe selon A-A de la figure 2 montrant l'interrupteur disposé dans une cavité et ayant une première configuration;
- La figure 6 illustre une vue en coupe selon B-B de la figure 4 montrant l'interrupteur disposé dans une cavité et ayant une seconde configuration;
- La figure 7 illustre une vue de dessus partielle de la figure précédente.

A la figure 1, on illustre la réalisation selon l'art antérieur d'un dispositif 1 de communication radiofréquence ou transpondeur qui comporte un composant électronique 3, un circuit d'antenne 5 associé au composant électronique 3 et une zone de réception 2 d'un interrupteur sur le circuit apte à fermer le circuit d'antenne, ouvert à ce niveau.

Le circuit d'antenne comporte dès sa réalisation sur un support 11 deux ouvertures, respectivement pour la connexion au composant électronique et pour interagir avec un interrupteur (non représenté). Des plages de contact ou plots 7, 9 sont prévus sur la spire d'antenne au niveau de l'emplacement de l'interrupteur.

Ce dispositif a l'inconvénient de ne pas pouvoir fonctionner dans un état intermédiaire qui ne comporterait pas d'interrupteur fermant le circuit au niveau des contacts 7 et 8 et autorisant le fonctionnement.

La figure 2 illustre un dispositif radiofréquence 1 sous forme d'insert pour carte à puce sans contact obtenu par un mode de mise en oeuvre du procédé de l'invention. Le procédé comporte une première étape dans laquelle l'antenne 13 est réalisée sous forme d'un circuit fermé (à l'exception des extrémités d'antenne connectées au composant électronique 3 (sous forme de puce ou module électronique). L'antenne 13 est pour le moins en circuit fermé au niveau d'une zone 2 pouvant recevoir un interrupteur.

L'antenne présente 3 spires S1, S2, S3, ayant un espacement (e) régulier déterminé à 700 µm. Par espacement régulier on entend un espacement sensiblement constant entre les spires. Les spires forment ensemble une bobine ayant un parcours régulier avec un espacement inter-spires inférieur ou égal à 2 mm voire 3,5 mm. Les spires ont par exemple un diamètre compris entre 50 et 300 µm et sont gainées d'isolant.

Pour des raisons de simplicité de mise en oeuvre, les spires sont généralement disposées parallèlement et espacées régulièrement les unes par rapport aux autres mais il n'est pas exclu d'avoir des espacements sensiblement variables.

Dans l'exemple, le fil est incrusté dans un support polymère 11 par ultrasons. Mais il pourrait être réalisé autrement, par toute technique connue, telle la gravure et dépôt électrochimique, découpe de feuille métallique. Le support peut être en divers matériaux notamment synthétique et/ou comprendre des fibres en matière cellulosique tel du papier.

Selon un mode de mise en oeuvre ou réalisation préféré, l'antenne comporte une portion 15 située à distance des spires et qui ne suit pas un parcours normal ou régulier formé par les autres spires. De ce fait, la portion 15 s'écarte du parcours normal manifestement sans raison apparente, contrairement au fait, par exemple, de suivre un parcours pour connecter un composant.

Cette portion d'antenne est, dans l'exemple, située en dehors de son parcours régulier formant la bobine et situé notamment en périphérie du support. La portion 15 est éloigné à la fois de son parcours régulier et des extrémités de connexion d'une distance D. Cette distance D est de préférence supérieure à 10 mm, voire plus de 15 mm ou de 20 mm. Mais elle pourrait être plus réduite selon l'encombrement de l'interrupteur, par exemple de 5 à 10 mm.

Dans l'exemple, la portion continue et fermée de spire a une longueur (L) de plus de 10 mm et se trouve entièrement éloignée de son espacement inter-spires (e). Dans l'exemple, une portion de plus de 20 mm de spire d'antenne est dérivée du parcours normal de bobine sous forme d'une boucle ou un "U". La carte présente le format ISO de 54 mm X 76 mm.

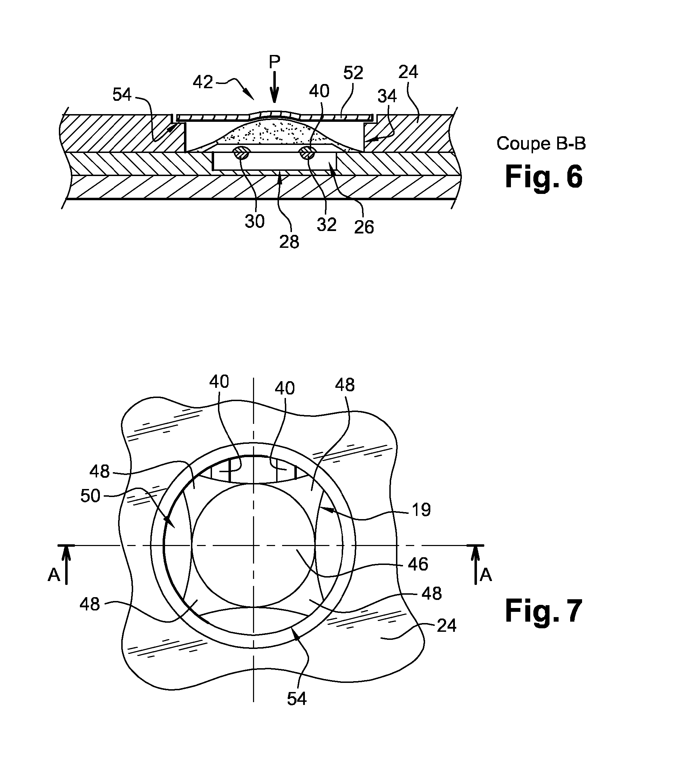

La portion 15 peut comporter deux branches (54, 56) en regard l'une de l'autre, par exemple en forme de "U" ou "V" et distantes d'une longueur comprise entre 1 et 10 mm selon la largeur de l'élément conducteur 19 de l'interrupteur (fig.7).

Le cercle en pointillé illustre un emplacement de zone 2 destinée à recevoir l'interrupteur ou à être usinée.

Selon une étape du mode de mise en oeuvre, un élément de court-circuit est disposé sur le circuit d'antenne de manière à court-circuiter l'interrupteur ou des bornes destinées à connecter un interrupteur, l'élément étant apte à être ouvert dans une étape ultérieure.

Dans l'exemple, l'élément de court-circuit est réalisé par une boucle C qui s'étend à partir d'une zone 2 de l'interrupteur ou bornes 30, 32 pouvant connecter un interrupteur. La boucle s'étend à travers la zone de l'interrupteur jusque dans une zone EMB dite d'interruption. Les fils sont des fils gainés d'isolant pour permettre des croisements de fils

L'interrupteur pourra être installé ultérieurement mais même installé, il sera inactif puisque mis en court-circuit par l'élément de court-circuit aux bornes du bouton.

Dans l'exemple, la boucle s'étend dans une zone d'embossage E du corps d'une carte bancaire ou se trouve la zone d'interruption EMB. Ainsi, lors d'une étape ultérieure finale d'embossage comportant par exemple des numéros et/ou le nom de l'utilisateur, une zone EMB, notamment rectangulaire, est embossée pour sectionner la boucle ayant passé le bouton.

Comme la carte reste fonctionnelle même avec la présence du bouton actionné ou non et tant que le court-circuit n'est pas ouvert dans la zone d'interruption, alors tous les essais électriques et de personnalisation peuvent être réalisés même après montage de l'interrupteur et sans avoir besoin de l'actionner.

A la figure 3, la carte 1 comporte un interrupteur 14 installé et la boucle (C') s'étend jusque dans une zone P de poinçonnage du corps de carte notamment pour réaliser un oeillet ou orifice pour porte-clés. Un anneau non conducteur est recommandé pour traverser l'oeillet pour éviter une fermeture électrique accidentelle du circuit. L'oeillet est déjà formé sur la figure et la boucle (C') est interrompue.

Le cas échéant, l'oeillet peut être prédécoupé de manière à n'être retiré qu'en ultime phase par l'utilisateur final lui-même. Tout autre forme de prédécoupe ou d'objet à prédécouper peut convenir.

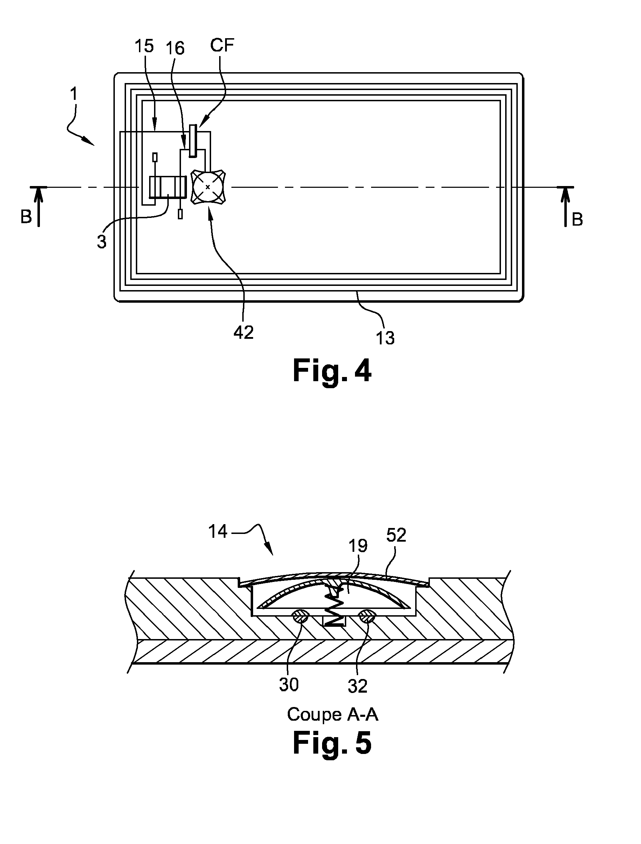

A la figure 4, selon une variante de mise en oeuvre, un dispositif 1 comporte une antenne 13 connectée à un module électronique 3 et un élément de court-circuit CF est disposé sur deux brins d'antenne 15, 16 avant qu'ils ne parviennent à un interrupteur 43. L'élément CF ici est un fusible s'étendant entre les deux brins 15, 16. Le fusible est placé ici juste avant l'interrupteur mais pourrait être placé d'une manière quelconque dès l'instant où l'interrupteur est mis en court-circuit par le fusible, par exemple juste après. La matière du fusible et ses caractéristiques dimensionnelles sont déterminées de manière à faire claquer le fusible par la soumission de l'antenne à un champ électromagnétique suffisamment fort pour générer un courant ou intensité de claquage. Le cas échéant, le fusible peut être placé dans la puce. Après ouverture du circuit par claquage, le dispositif comporte les caractéristiques d'un fusible claqué.

Le bouton peut être réalisé comme précédemment tel qu'illustré à la figure 5.

Toutefois, pour faciliter une gestion des stocks ou faciliter la production, il est préférable d'avoir un seul modèle de circuit d'antenne quelle que soit la destination finale avec ou sans interrupteur, dans lequel un circuit d'antenne est fermé une fois connecté à la puce ou module électronique.

Dans ce cas, il est préférable de recourir à un mode de réalisation de bouton illustré aux figures 6 et 7 et qui comprend une étape d'interruption du circuit d'antenne dans la zone du bouton. La réalisation de ce bouton est décrite ci-après.

Une zone d'interruption du circuit d'antenne est crée au niveau de la zone de l'interrupteur au moins par enlèvement de matière de l'antenne. Pour ouvrir le circuit d'antenne, il faut que l'antenne au moins soit coupée entièrement. De préférence, la matière de l'antenne est enlevée de préférence avec de la matière du support située en dessous.

Cette étape est effectuée après connexion du composant de manière à pouvoir tester le dispositif au préalable. Mais, elle pourrait être réalisée avant si nécessaire, auquel cas subsisterait quand même l'avantage d'un support commun à deux utilisations différentes.

Dans l'exemple, on enlève la matière après disposition d'une couche de protection ou de revêtement 24 sur le circuit d'antenne et le composant 3.

Pour l'enlèvement de matière, on réalise un premier usinage d'une cavité 26 à travers la feuille de couverture de manière à créer un fond 28 de cavité en dessous de ladite portion ou plan d'antenne jusqu'à sectionner complètement la portion d'antenne pour former deux extrémités libres 30, 32 et donc un circuit ouvert à ce niveau. L'usinage comprend une opération de découpe notamment parmi le fraisage, poinçonnage ou perçage.

Le procédé comprend en outre la réalisation d'un second usinage de cavité 34 plus large que la première 26 de manière à découvrir en surface les deux extrémités libres conductrices de ladite portion d'antenne et présenter des zones de contact orientées vers l'extérieur de la cavité. Ce second usinage est moins profond, il vient simplement dénuder radialement les spires à ce niveau, et de ce fait, elles présentent chacune une surface nue 36, 38 orientée vers l'entrée de la cavité.

Le cas échéant, de préférence, on dispose de la matière conductrice 40 sur les parties de spire d'antenne ainsi découvertes et usinées 36, 38 de manière d'une part à faciliter le contact électrique avec un élément de court-circuit de l'interrupteur par une surépaisseur, mais aussi éviter éventuellement de l'oxydation ou une corrosion, qui empêcherait d'établir un bon contact électrique. La matière est de préférence élastique à température ambiante pour amortir le contact avec l'interrupteur et faciliter les contacts. Elle peut comprendre par exemple un polymère conducteur.

Ensuite, on interpose un interrupteur 42 sur le circuit d'antenne dans la zone de réception de l'interrupteur de manière à fermer le circuit d'antenne. Dans l'exemple, un élément élastique conducteur 19 de court-circuit est interposé de manière à venir court-circuiter ou mettre en contact lesdites deux extrémités libres conductrices 30, 32, sous l'effet d'un actionnement, ou exercice d'une pression P sur l'élément 19.

L'élément est ici une rondelle de type Belleville, comportant un dôme central 46, relié éventuellement à quatre pieds 48 en forme de languette élastique. Les pieds reposent sur le plan 50 du second usinage, et sous l'effet d'une pression, les languettes se déforment élastiquement et le dôme en s'affaissant met en court-circuit ou en contact électrique les deux extrémités libres 30, 32 exposées dans la cavité.

Enfin, un opercule souple ou membrane 52, accessible de l'extérieur, est fixé, notamment par collage, sur un troisième plan 54 usiné au-dessus de l'élément conducteur, en obturant la cavité.

La figure 5 décrit une variante de réalisation d'un bouton interrupteur dans lequel les spires ne sont pas sectionnées par une cavité de logement d'un contacteur, constitué ici par un dôme comprenant au centre un ressort logé en partie dans une cavité centrale..

Par ailleurs, dans l'exemple des figures 3, 4 l'extrémité de boucle peut se trouver dans la carte mais dans une variante, cette extrémité pourrait être localisée en dehors de la surface standard de la carte.

Ainsi selon l'invention, la zone de court-circuit est localisée de préférence en dehors de la zone de l'interrupteur 2. La zone de court-circuit ou d'interruption correspond à des zones utiles comme zone d'embossage et de perforation avantageusement effectuées en fin de procédé de fabrication. Grâce à cette disposition, l'interruption peut s'effectuer sans étape ou outillage supplémentaire.

## Revendications

1. Procédé de réalisation d'un dispositif de communication radiofréquence comportant un composant électronique, un circuit d'antenne associé au composant électronique et un interrupteur sur le circuit apte à fermer le circuit d'antenne,
**caractérisé en ce qu'**il comprend les étapes suivantes selon lesquelles un élément de court-circuit (C, C', CF) est disposé sur le circuit d'antenne (13) de manière à court-circuiter l'interrupteur (14, 42) ou des bornes (30, 32) destinées à connecter un interrupteur, ledit élément étant apte à être ouvert dans une étape ultérieure.

2. Procédé selon la revendication précédente, **caractérisé en ce que** ledit élément de court-circuit est disposé sur deux brins (15, 16) d'antenne avant de parvenir à l'interrupteur (42).

3. Procédé selon la revendication 1, **caractérisé en ce que** ledit élément de court-circuit (C, C') est disposé après le passage du circuit d'antenne par des points de contact (30, 32) destinés à contacter l'interrupteur (14).

4. Procédé selon l'une des revendications 1 ou 2, **caractérisé en ce que** ledit élément est un fusible (CF).

5. Procédé selon l'une des revendications 1 ou 3, **caractérisé en ce que** ledit élément de court-circuit (C, C') passe par une zone (E, EMB, P) du dispositif destinée à être éliminée ou déformée.

6. Dispositif électronique de communication radiofréquence comportant un composant électronique (3), un circuit électrique d'antenne (22) relié au composant électronique et un interrupteur (42) disposé sur le circuit d'antenne et apte à fermer le circuit d'antenne sur actionnement,
**caractérisé en ce qu'**il comprend un élément de court-circuit (C, C', CF) disposé sur le circuit d'antenne (13) de manière à court-circuiter l'interrupteur (14, 42) ou des bornes (30, 32) destinées à connecter un interrupteur, ledit élément de court-circuit ayant été ouvert ou étant apte à l'être.
